# EUROPEAN PATENT APPLICATION

(11) **EP 0 919 586 A1**
(43) Date of publication of application: **02.06.1999**
(21) Application number: 98911188.5
(22) Date of filing: 03.04.1998
(51) Int. Cl.: C08J 9/00

(54) **PROCESS FOR PRODUCING MICROPOROUS POLYOLEFIN FILM**

(30) Priority: 04.04.1997 JP 102550/97
(71) Applicant: Tonen Chemical Corporation, Tokyo 105-8410 (JP)
(72) Inventor: KAIMAI, Norimitsu, Tonen Chemical Corp., Kawasaki-si, Kanagawa 210-0865 (JP); TAKITA, Kotaro, Tonen Chemical Corp., Kawasakishi-shi, Kanagawa 210-0865 (JP); KONO, Koichi, Tonen Chemical Corp., Kawasakishi-sshi, Kanagawa 210-0865 (JP)
(74) Representative: Müller-Boré & Partner Patentanwälte
(86) International application number: JP9801537
(87) International publication number: WO9845358

(57) **Abstract**

The present invention provides a method of producing a microporous polyolefin membrane having a relatively large pore size and sharp pore size distribution useful as a filter for water treatment and microfiltration, comprising the steps of (a) preparing a solution comprising 5 to 40 weight % of a polyolefin composition containing an ultra-high-molecular-weight polyolefin having a weight-average molecular weight of 5 × 10⁵ or more, and 95 to 60 weight % of a solvent, (b) extruding the solution through a die lip, (c) quenching the extruded solution into a sheet, and (d) stretching the sheet at an areal stretching ratio of 1.01- to 1.4-fold.

## Description

### TECHNICAL FIELD

This invention relates to a method of producing a microporous membrane composed of a polyolefin composition containing an ultra-high-molecular-weight polyolefin, more particularly to a microporous polyolefin membrane of high permeability.

### BACKGROUND OF THE INVENTION

Microporous membranes are widely used in various applications such as battery separators, electrolytic capacitor separators, various filters, moisture-permeable and waterproof clothes, reverse osmosis membranes, ultrafiltration membranes, microfiltration membranes, etc.

Microporous polyolefin membranes are produced by various processes, such as an extraction process comprising the steps of mixing a polyolefin with inorganic powder such as finely powdered silica, melting and molding the mixture, and extracting the organic solvent and inorganic powder. This method needs a process of extracting the inorganic powder, and permeability of the membrane produced depends largely on particle size of the inorganic powder used and is difficult to control.

Recently, various processes have been proposed to produce high-strength, microporous membranes which contain an ultra-high-molecular-weight polyolefin. For example, Japanese Patent Laid-Open Nos. 60-242035, 61-195132, 61-195133, 63-39602 and 63-273651 disclose processes to produce microporous membranes by forming a gel-like sheet from a heated solution of a polyolefin composition containing an ultra-high-molecular-weight polyolefin dissolved in a solvent, stretching it while heating, and removing the solvent by extraction. These processes give the microporous polyolefin membranes characterized by a narrow pore size distribution and small pore size, which, although suitable for battery separators, are insufficient in pore size for some purposes.

Recently, microporous membranes of varying permeability are in demand for specific purposes, and controlling permeability of membranes for similar purposes is also demanded to improve a certain characteristic. However, prior art, forming a number of fine pores by stretching, gives membranes of small pore size. Therefore, development of microporous membranes with sufficiently large pores for some purposes, such as water treatment and microfiltration, has been demanded.

### DISCLOSURE OF THE INVENTION

The applicants of the present invention have found that a microporous membrane of low thermal shrinkage, large size and sharp pore size distribution can be produced by extruding a solution of a composition containing an ultra-high-molecular-weight polyolefin dissolved in a solvent, and quenching and stretching the extruded solution at a low stretching ratio in a specified range, to reach the present invention.

The method of producing a microporous membrane according to the present invention comprises the steps of (a) preparing a solution comprising 5 to 40 weight % of a polyolefin composition containing an ultra-high-molecular-weight polyolefin having a weight-average molecular weight of 5 × 10⁵ or more, and 95 to 60 weight % of a solvent, (b) extruding the solution through a die lip, (c) quenching the extruded solution into a sheet, and (d) stretching the sheet at an areal stretching ratio of 1.01- to 1.4-fold.

### PREFERREED EMBODIMENTS OF THE INVENTION

The present invention is described in more detail.

The polyolefin composition for the microporous polyolefin membrane produced by the present invention contains at least 1 weight % of ultra-high-molecular-weight polyolefin having a weight-average molecular weight of 5 × 10⁵ or more, preferably in a range from 1 × 10⁶ to 15 × 10⁶, and a weight-average molecular weight/number-average molecular weight ratio of 10 to 300. More preferably, it is a mixture of (A) an ultra-high-molecular-weight polyolefin having a weight-average molecular weight of 5 × 10⁵ or more and (B) a polyolefin having a weight-average molecular weight of less than 5 × 10⁵, where a B/A weight ratio is 0.2 to 20, preferably 0.5 to 10. When the B/A weight ratio is below 0.2, the gel-like sheet produced tends to shrink in the thickness direction and decrease in permeability, and viscosity of the solution increases to deteriorate its molding processability. When the B/A weight ratio is above 20, on the other hand, concentration of the ultra-high-molecular-weight polyolefin is excessively low, to result in densified gel structure and lowered permeability of the microporous membrane produced.

Examples of the above polyolefins include crystalline homopolymers, two-stage polymers or copolymers of ethylene, propylene, 1-butene, 4-methyl-pentene-1 or 1-hexene, or blends thereof. Preferable among them are polypropylene, polyethylene (particularly high-density polyethylene) and compositions thereof.

The above polyolefin composition has a molecular weight distribution (weight-average molecular weight/number-average molecular weight) of 300 or less, preferably 5 to 50. The molecular weight distribution of above 300 is undesirable, because the membrane comprising such a composition may suffer breakdown by the lower molecular weight components to lose its strength as a whole. The desirable molecular weight distribution can be obtained by adequately mixing an ultra-high-molecular-weight polyolefin having a weight-average molecular weight of 5 × 10⁵ or more and a polyolefin having a weight-average molecular weight of less than 5 × 10⁵ with each other.

Other polyolefins than the ultra-high-molecular-weight polyolefin in the polyolefin composition, i.e., those having a weight-average molecular weight of less than 5 × 10⁵, preferably have a lower weight-average molecular weight limit of 1 × 10⁴. When a polyolefin having a weight-average molecular weight of less than 1 × 10⁴ is used, rupture is likely to take place in the membrane, failing to provide a desired microporous membrane. It is therefore preferable to mix a polyolefin having a weight-average molecular weight of 1 × 10⁴ or more but less than 5 × 10⁵ with the ultra-high-molecular-weight polyolefin.

Incidentally, the above-mentioned ultra-high-molecular-weight polyolefin may be incorporated with various additives such as antioxidants, ultraviolet absorbers, antiblocking agents, pigments, dyes, inorganic fillers, etc., if required, within limits not harmful to the object of the present invention.

In the method of the present invention for producing a microporous membrane, a solution is prepared by dissolving the above polyolefin composition in a solvent while heating. Examples of the solvents include aliphatic or cyclic hydrocarbons such as nonane, decane, decalin, p-xylene, undecane, dodecane, paraffin oils, etc., and fractions of mineral oils having boiling points substantially equal to those of the above hydrocarbons. These solvents have a viscosity of 30 to 500cSt at 25°C, preferably 50 to 200cSt. Uneven extrusion results when viscosity is below 30cSt at 25°C, making it difficult to knead the solution, whereas the solvent is difficult to remove in the post treatment when viscosity is above 500cSt.

Dissolution of the polyolefin composition while heating is carried out by stirring its solution at a temperature at which it is completely dissolved in the solvent, or uniformly mixing the composition and solvent with each other in an extruder. When the polyolefin composition is to be dissolved in the solvent with stirring, the dissolving temperature varies depending on the types of polymers and solvents used. It is in the range of 140 to 250°C in the case of polyethylene composition. It is preferable to effect the dissolution in an extruder, when a high-concentration solution of the polyolefin composition is used to produce a microporous membrane.

When the dissolution is to be effected in an extruder, the polyolefin composition is first charged in the extruder to be molten, at a temperature preferably 30 to 100°C above melting point of the polyolefin, although varying depending on type of the polyolefin used. For example, it is 160 to 230°C, preferably 170 to 200°C, in the case of polyethylene, and 190 to 270°C, preferably 190 to 250°C, in the case of polypropylene. Then, a liquid solvent is added to the polyolefin composition in the middle of the extruder.

The concentration of the polyolefin composition is 5 to 40 weight % based on the total solution, preferably 10 to 30 weight %, or conversely the concentration of the solvent is 95 to 60 weight %, preferably 90 to 70 weight %. When the polyolefin composition concentration is less than 5 weight % (or the solvent concentration is more than 95 weight %), swelling and neck-in are likely to take place at the exit of a die in the process of forming sheets. Accordingly, it is difficult to keep good molding processability and self-supporting characteristics of the sheet produced. On the other hand, when the polyolefin composition concentration is more than 40 weight % (or the solvent concentration is less than 60 weight %), the sheet produced will suffer various problems, such as excessive shrinkage in the thickness direction, lowered porosity, and deteriorated molding processability. Accordingly, it is difficult to produce the microporous membrane having large pores. It is possible to control permeability of the membrane by changing the polyolefin composition concentration in the above range.

Next, the heated solution of the molten and kneaded polyolefin composition is extruded through a die or the like, in such a way to secure the final membrane thickness of 5 to 250µm.

Usually used as a die is a sheet die having a rectangular orifice, but a double-pipe hollow die, an inflation die, etc. may be used. When the sheet die is used, a die cap is usually 0.1 to 5mm, and heated at 140 to 250°C in the extrusion process. In this case, a casting roll speed is usually 20. 30cm/minute to 15m/minute.

The solution extruded through the die is formed into a gel-like article by quenching. It is cooled to 90°C or below, preferably to 80 to 30°C, at a speed of at least 50°C/minute. As a method of cooling the gel-like article, direct contact with cooling air, cooling water or other cooling media, contact with a roll cooled by a coolant, etc. may be employed. Contact with a cooled roll is a preferable method.

The gel-like article produced will have a rough higher-order structure, and the pseudo-cell units that constitute the structure also become rough at an excessively low cooling speed, whereas dense cellar units result at a sufficiently high cooling speed. Decreasing cooling speed to below 50°C/minute makes the gel structure close to that comprising individual bubbles, and increases its crystallization degree, making it difficult to remove the solvent.

The gel-like article is then stretched by an ordinary method, such as a tenter, roll, calender method or a combination thereof at a given stretching ratio. It may be monoaxial or biaxial. In the case of biaxial stretching, the gel-like article may be stretched in the longitudinal and transverse directions simultaneously or sequentially. The simultaneous stretching is more preferable.

The stretching temperature should be in a range from the polyolefin crystal dispersion temperature to 10°C above the crystal melting point, preferably in a range from the crystal dispersion temperature to the crystal melting point. For a polyethylene composition, for example, it is preferably in a range from 90 to 130°C, more preferably from 90 to 120°C. If the stretching temperature is higher than the melting point plus 10°C, the molecular orientation by stretching does not take place because the resin melts. If the stretching temperature is lower than the crystal dispersion temperature, on the other hand, the resin is softened insufficiently, with the result that the membrane tends to break and stretching ratio cannot be well controlled.

The stretching ratio should be set at 1.01- to 1.4-fold as areal stretching ratio, preferably 1.05- to 1.25-fold. Controlling the areal stretching ratio in the above range allows to produce a microporous membrane having pores of 0.05 to 0.5µm in size and a sharp pore size distribution. Stretching is a necessary step; dispensing with the step makes the pore size distribution broader, although giving large pores, and hence is undesirable. When the areal stretching ratio exceeds 1.4-fold, a microporous membrane of large pores may not be produced, because of opening of the polyolefin lamellas, which constitute the gel structure, into fibrils.

The stretched article is then washed with a solvent to remove the residual solvent. Solvents used for this solvent-removing treatment may be volatile ones, including hydrocarbons such as pentane, hexane and heptane; chlorinated hydrocarbons such as methylene chloride and carbon tetrachloride; fluorinated hydrocarbons such as trifluoroethane; and ethers such as diethyl ether and dioxane. These volatile solvents may be used individually or in combination, and their selection depends on the types of the nonvolatile solvents used to dissolve the polyolefin composition. Washing methods with the solvents include an extraction method with solvents, a method of spraying solvents or a combination thereof.

The washing of the stretched article with a solvent should be performed to such an extent that the content of the residual solvent is less than 1 weight %. The stretched article is finally dried to remove the washing solvent by a heating method, an air-drying method, etc. The dried article is desirably heat-set at a temperature in a range from the crystal dispersion temperature to the melting point.

The microporous polyolefin membrane produced as mentioned above is a highly permeable one, having an air permeability of 5 to 250 seconds/100cc, porosity of 35 to 95%, and average through-hole pore size of 0.05 to 0.5µm.

The resulting microporous polyolefin membrane is, if necessary, subjected to a hydrophilic treatment by plasma irradiation, impregnation with a surface active agent, surface grafting, etc.

### PREFERRED EMBODIMENTS

The present invention is described in more detail by the following preferred embodiments, which by no means limit the present invention. The properties cited in the preferred embodiments were determined by the following test methods:
(1) Membrane thickness: Determined by measuring a cross section of a microporous membrane by a scanning electron microscope.
(2) Air permeability: Measured according to JIS P8117.
(3) Average pore size: Measured by Coulter Prometer II manufactured by Coulter Co.
(4) Pore size distribution : Determined from the standard deviations of the pore size and number distributions.
(5) Thermal shrinkage: Determined after exposing the sample to an atmosphere kept at 105°C for 8 hours.

### EXAMPLE 1

A polyethylene mixture, composed of 80 weight % of a high-density polyethylene (HDPE) having a weight-average molecular weight of 3.0 × 10⁵ and 20 weight % of an ultra-high-molecular-weight polyethylene (UHMWPE) having a weight-average molecular weight of 2.5 × 10⁶, was incorporated with 0.375 weight parts of an antioxidant based on 100 weight parts of the polyethylene mixture, to prepare a polyethylene composition. Thirty (30) weight parts of the polyethylene composition was fed to a biaxial extruder (58mm in diameter, L/D ratio = 42, high kneading type), and 70 weight parts of liquid paraffin was also fed to the biaxial extruder from the side feeder, to prepare a polyethylene solution in the extruder by melting the polyethylene composition and kneading it with the liquid paraffin at 200°C and 200rpm. The resulting solution was extruded from the T-die attached at the extruder end in such a way to have 50 to 60µm as thickness of the final product, and taken up by a cooling roll, kept at 50°C, to prepare a gel-like sheet. The sheet was then monoaxially stretched at 115°C at an areal stretching ratio of 1.2-fold. The resulting membrane of low stretching ratio was washed with methylene chloride to remove the residual liquid paraffin by extraction, dried and heat-treated to prepare a 62µm thick microporous polyethylene membrane. The properties of the membrane are shown in Table 1.

### EXAMPLE 2

A microporous membrane was prepared in the same manner as in EXAMPLE 1 except that it was stretched at an areal stretching ratio of 1.1-fold. The properties of the membrane are shown in Table 1.

### EXAMPLE 3

A microporous membrane was prepared in the same manner as in EXAMPLE 1 except that it was stretched at an areal stretching ratio of 1.4-fold. The properties of the membrane are shown in Table 1.

### EXAMPLE 4

A microporous membrane was prepared in the same manner as in EXAMPLE 1 except that it was stretched at an areal stretching ratio of 1.4-fold by biaxial stretching in the longitudinal and transverse directions simultaneously. The properties of the membrane are shown in Table 1.

### COMPARATIVE EXAMPLE 1

A microporous membrane was prepared in the same manner as in EXAMPLE 1 except that it was stretched at an areal stretching ratio of 25-fold by biaxial stretching. The properties of the membrane are shown in Table 1.

### COMPARATIVE EXAMPLE 2

A microporous membrane was prepared in the same manner as in EXAMPLE 1 except that it was stretched at an area] stretching ratio of 4-fold by biaxial stretching. The properties of the membrane are shown in Table 1.

### COMPARATIVE EXAMPLE 3

A microporous membrane was prepared in the same manner as in EXAMPLE 1 except that it was stretched at an areal stretching ratio of 4-fold by monoaxial stretching. The properties of the membrane are shown in Table 1.

### COMPARATIVE EXAMPLE 4

A microporous membrane was prepared in the same manner as in EXAMPLE 1 except that it was not stretched. The properties of the membrane are shown in Table 1.

As shown in Table 1, which gives the properties of the microporous membranes prepared by EXAMPLES and COMPARATIVE EXAMPLES, it is apparent that the microporous membranes prepared at a low areal stretching ratio in the range for the present invention have a low thermal shrinkage, large pores and sharp pore size distribution.

**Table 1**

| | EXAMPLES | | | |
|---|---|---|---|---|
| | 1 | 2 | 3 | 4 |
| | | | | |

| PE Composition | | | | |
|---|---|---|---|---|
| UHMWPE (Mw) | 2.5 × 10⁶ | 2.5 × 10⁶ | 2.5 × 10⁶ | 2.5 × 10⁶ |
| Content (wt%) | 20 | 20 | 20 | 20 |
| HDPE (Mw) | 3.0 × 10⁵ | 3.0 × 10⁵ | 3.0 × 10⁵ | 3.0 × 10⁵ |
| Content (wt%) | 80 | 80 | 80 | 80 |
| Resin Conc. (wt%) | 30 | 30 | 30 | 30 |

| Stretching Conditions | | | | |
|---|---|---|---|---|
| Directions | monoaxial | monoaxial | monoaxial | biaxial |
| Areal Ratio | 1.2 | 1.1 | 1.4 | 1.4 |
| Temperature (°C) | 115 | 115 | 115 | 115 |

| Membrane Properties | | | | |
|---|---|---|---|---|
| Thickness (µm) | 62 | 65 | 57 | 66 |
| Permeability (seconds) | 70 | 100 | 90 | 85 |
| Pore Size (µm) | 0.26 | 0.23 | 0.19 | 0.17 |
| Pore Size Distribution (Standard Deviation) | 0.037 | 0.037 | 0.040 | 0.041 |
| Thermal Shrinkage (%) | 1 | 1 | 2 | 2 |

| | COMPARATIVE EXAMPLES | | | |
|---|---|---|---|---|
| | 1 | 2 | 3 | 4 |
| | | | | |

| PE Composition | | | | |
|---|---|---|---|---|
| UHMWPE (Mw) | 2.5 × 10⁶ | 2.5 × 10⁶ | 2.5 × 10⁶ | 2.5 × 10⁶ |
| Content (wt%) | 20 | 20 | 20 | 20 |
| HDPE (Mw) | 3.0 × 10⁵ | 3.0 × 10⁵ | 3.0 × 10⁵ | 3.0 × 10⁵ |
| Content (wt%) | 80 | 80 | 80 | 80 |
| Resin Conc. (wt%) | 30 | 30 | 30 | 30 |

| Stretching Conditions | | | | |
|---|---|---|---|---|
| Directions | biaxial | biaxial | monoaxial | (no stretching) |
| Areal Ratio | 25 | 4 | 4 | - |
| Temperature (°C) | 115 | 115 | 115 | - |

| Membrane Properties | | | | |
|---|---|---|---|---|
| Thickness (µm) | 50 | 55 | 42 | 65 |
| Permeability (seconds) | 700 | 250 | 210 | 110 |
| Pore Size (µm) | 0.03 | 0.07 | 0.00 | 0.24 |
| Pore Size Distribution (Standard Deviation) | 0.040 | 0.070 | 0.079 | 0.064 |
| Thermal Shrinkage (%) | 7 | 4 | 4 | 1 |

### INDUSTRIAL APPLICABILITY

As described in detail, a microporous membrane having a high permeability and sharp pore size distribution and useful as a liquid-treating filter, such as that for water treatment, is produced by the method of the present invention which stretches, at a low stretching ratio in a specified range, a gel-like sheet obtained from a polyolefin composition solution containing an ultra-high-molecular-weight polyolefin.

## Claims

1. A method of producing a microporous membrane comprising the steps of:
(a) preparing a solution comprising 5 to 40 weight % of a polyolefin composition containing an ultra-high-molecular-weight polyolefin having a weight-average molecular weight of 5 × 10⁵ or more, and 95 to 60 weight % of a solvent,
(b) extruding said solution through a die lip,
(c) quenching said extruded solution into a sheet, and
(d) stretching said sheet at an areal stretching ratio of 1.01- to 1.4-fold.

2. The method according to claim 1, wherein said areal stretching ratio is in a range from 1.05- to 1.25- fold.

3. The method according to claim 1 or 2, wherein said stretched sheet is treated to remove the residual solvent, dried and heat-set.

4. The method according to claim 1, 2 or 3, wherein said polyolefin composition is a mixture of (A) an ultra-high-molecular-weight polyolefin having a weight-average molecular weight of 5 × 10⁵ or more and (B) a polyolefin having a weight-average molecular weight of less than 5 × 10⁵, B/A weight ratio being 0.2 to 20.
